# EUROPÄISCHE PATENTSCHRIFT

(11) **EP 0 596 387 B1**
(45) Veröffentlichungstag und Bekanntmachung des Hinweises auf die Patenterteilung: **26.06.1996**
(21) Anmeldenummer: 93117322.3
(22) Anmeldetag: 26.10.1993
(51) Int. Cl.: B65G 37/00, B65G 47/57, B65B 61/28

(54) **Vorrichtung zum Transport von Zigaretten-Packungen**
Device for transporting cigarette packages
Dispositif pour transporter des paquets de cigarettes

(30) Priorität: 06.11.1992 DE 4237508; 11.10.1993 DE 4334479
(43) Veröffentlichungstag der Anmeldung: 11.05.1994
(73) Patentinhaber: Focke & Co. (GmbH & Co.), D-27283 Verden (DE)
(72) Erfinder: Focke, Heinz, D-27283 Verden (DE); Stiller, Martin, D-27283 Verden (DE)
(74) Vertreter: Bolte, Erich, Dipl.-Ing.

(56) Entgegenhaltungen:
- DE-C- 612 682
- DE-C- 844 576
- DE-C- 3 716 170
- FR-E- 86 985
- US-A- 4 380 283

## Beschreibung

Die Erfindung betrifft eine Vorrichtung zum Transport von quaderförmigen Packungen, insbesondere Zigaretten-Packungen, die (die Packungen) durch rechteckige Vorder- und Rückflächen, langestreckte, schmale Seitenflächen und kleine Stirn- bzw. Bodenflächen begrenzt sind, insbesondere von einer ersten Verpackungsmaschine zu einer zweiten Verpackungsmaschine für eine Außenumhüllung der Packungen, mit folgenden Merkmalen:
a) ein Vertikalförderer weist zur Mitnahme der Packungen vertikal bewegte Mitnehmer auf,
b) dem Vertikalförderer nachgeordnet ist ein insbesondere horizontaler Abförderer,
c) an den Vertikalförderer schließt ein Überführungsförderer an, durch den die Packungen dem Abförderer zuführbar sind.

In der Verpackungstechnik ist innerhalb einer Verpackungsanlage häufig ein Transport von ganz oder teilweise fertiggestellten Packungen von einem Bearbeitungsaggregat zu einem anderen erforderlich. Bei der Fertigung von Zigaretten-Packungen sind beispielsweise die fertiggestellten Packungen von der Verpackungsmaschine zum Anbringen einer Außenumhüllung aus Zellglas oder Kunststoffolie einer weiteren Verpackungsmaschine zuzuführen. Diese beiden Verpackungsmaschinen sind aus vielerlei Gründen, insbesondere wegen der besseren Zugänglichkeit, im Abstand voneinander angeordnet, so daß beim Transport der Packungen eine größere Strecke zu überwinden ist.

Aus der DE-C 844 576 ist eine Vorrichtung zur Förderung gefüllter Preßformen bekannt. Diese werden mit einer großflächigen Unterseite auf Mitnehmern aufliegend vertikal gefördert und von einem rotierenden Übergabeförderer auf ein horizontales Förderband übergeben. Der Oberbegriff des Anspruchs 1 entspricht diesem Stand der Technik.

Der Erfindung liegt die Aufgabe zugrunde, eine Vorrichtung zum Transport der Packungen so auszubilden, daß zum einen die benachbarten Aggregate (Verpackungsmaschinen) allseitig frei zugängig und zum anderen die transportierten Packungen in eine optimale Relativstellung gebracht werden. Zur Lösung dieser Aufgabe ist die erfindungsgemäße Vorrichtung durch folgende Merkmale gekennzeichnet:
d) dem Vertikalförderer ist ein bandförmiger Zuförderer vorgeordnet, auf dem die Packungen mit einer Seitenfläche aufliegen bei in Förderrichtung weisender Vorder- oder Rückfläche,
e) bei Übergabe vom Zuförderer an den Vertikalförderer kommen die Packungen auf den Mitnehmern mit nach unten gerichteten Seitenflächen zu liegen,
f) bei Übergabe vom Vertikalförderer durch den Überführungsförderer an den Abförderer sind die Packungen in den letzteren durch Bewegung in Längsrichtung der Packungen einführbar, derart, daß diese mit einer unteren, schmalen Seitenfläche auf dem Abförderer aufliegen und mit ihrer Stirn- bzw. Bodenfläche in Förderrichtung weisen.

Durch die Kombination von Horizontalförderern und Vertikalförderern wird erreicht, daß ein Raum zwischen den benachbarten und transporttechnisch miteinander zu verbindenden Aggregaten (Verpackungsmaschinen) ein freier Durchgang geschaffen bzw. erhalten wird und die Packungen positionsgerecht abgefördert werden.

Ein weiteres Thema der Erfindung ist die Übergabe der geförderten Gegenstände, nämlich Packungen, von dem Vertikalförderer an einen Quer- bzw. Horizontalförderer. Hierfür ist erfindungsgemäß ein Überführungsförderer vorgesehen, der an endlosen Förderorganen angebrachte, ausschließlich translatorisch bewegte Packungsaufnahmen aufweist, die die Packungen von den Mitnehmern des Vertikalförderers abheben, längs einer bogenförmigen Bewegungsbahn transportieren und auf dem Abförderer ablegen. Die endlosen Förderorgane sind vorzugsweise zwei mit den Drehachsen versetzt zueinander angeordnete Drehscheiben, zwischen denen die Packungsaufnahmen an die Drehscheibe miteinander verbindenden parallelen Streben befestigt sind.

Durch diesen Überführungsförderer ist eine schonende Bewegung der Packungen vom Vertikalförderer zum Abförderer bei hoher Fördergeschwindigkeit gewährleistet.

Weitere Einzelheiten der Erfindung beziehen sich auf die Ausbildung und Anordnung der Förderorgane, insbesondere des Überführungsförderers.

Ausführungsbeispiele der Erfindung werden nachfolgend anhand der Zeichnungen näher erläutert. Es zeigt:

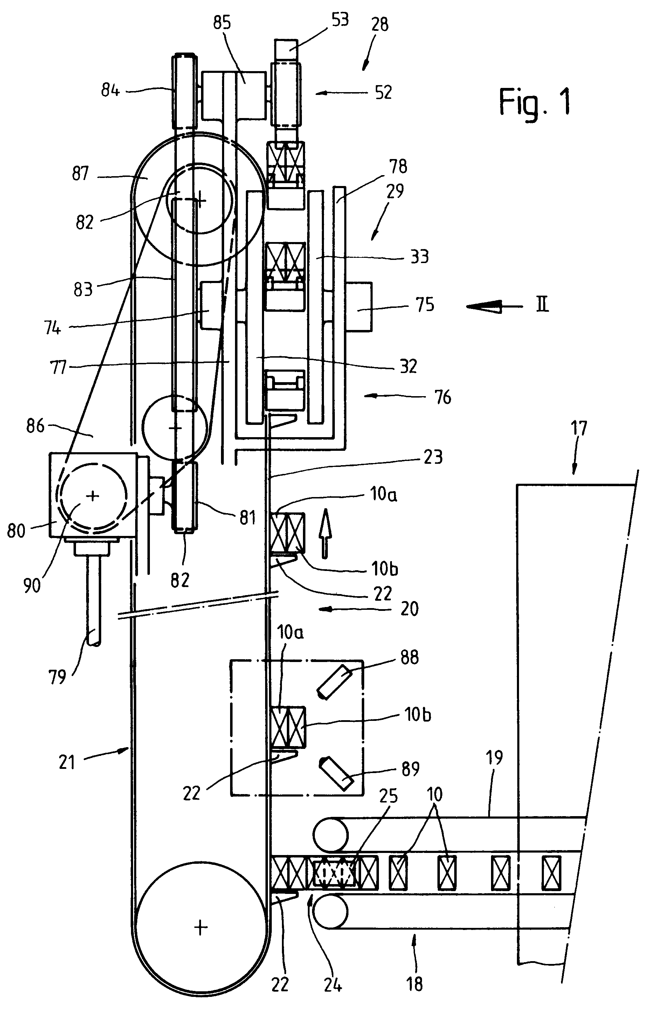

- Fig. 1: einen Teilbereich der Fördervorrichtung in schematischer Seitenansicht,

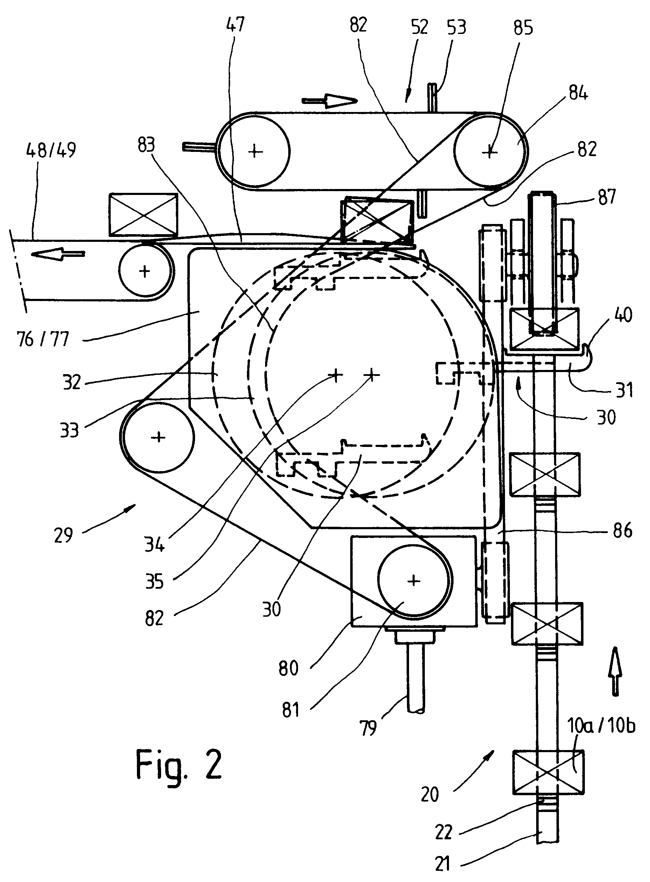

- Fig. 2: eine Einzelheit der Fördervorrichtung gemäß Fig. 1 in einer um 90° versetzten Ansicht gemäß Pfeil II, bei vergrößertem Maßstab,
- Fig. 3: eine Einzelheit eines Überführungsförderers in einer Ansicht entsprechend Fig. 2 bei nochmals vergrößertem Maßstab,

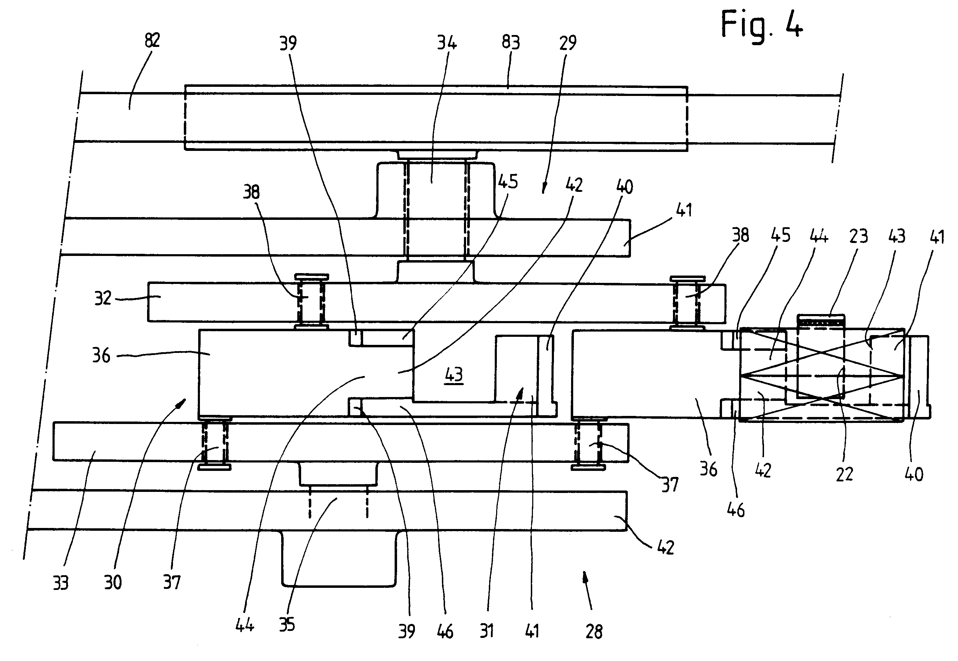

- Fig. 4: die Einzelheiten des Überführungsförderers gemäß Fig. 3 im Grundriß,
- Fig. 5: Einzelheiten eines an den Überführungsförderer anschließenden Abförderers im Grundriß,
- Fig. 6 bis Fig. 9: Einzelheiten des Abförderers gemäß Fig. 5 in Schnittebenen VI bis IX,
- Fig. 10: eine Alternativausführung für einen Abförderer entsprechend Fig. 5 in Seitenansicht,
- Fig. 11: eine Grundrißdarstellung zu Fig. 10.

Die in den Zeichnungen dargestellten Vorrichtungen befassen sich mit der Handhabung von quaderförmigen Packungen 10, und zwar Zigaretten-Packungen des Typs Klappschachtel (Hinge Lid). Diese bestehen aus dünnem Karton. Die Packungen 10 weisen parallele Flächen auf, nämlich eine Vorderfläche 11 und eine Rückfläche 12; schmale, langgestreckte Seitenflächen 13 und 14 sowie eine kleine Stirnfläche 15 - im Bereich eines Deckels - und eine Bodenfläche 16.

Die Packungen 10 sollen über eine längere Strecke transportiert werden, und zwar insbesondere von einer Verpackungsmaschine 17 zu einer weiteren Verpackungsmaschine (nicht gezeigt).

Die Packungen 10 werden auf einem Zuförderer 18 in einer Relativstellung transportiert, bei der die Längserstreckung quer zur Förderrichtung orientiert ist. Die langgestreckten, schmalen Seitenflächen 13, 14 liegen auf einem Fördertrum des Zuförderers 18 auf. Diesem ist ein Oberförderer 19 zugeordnet, der an den nach oben gerichteten Seitenflächen 13 der Packungen 10 anliegt.

An den Zuförderer 18 schließt ein Vertikalförderer 20 an. Dieser übernimmt die Packungen 10 unmittelbar vom Zuförderer 18. Der Vertikalförderer 20 besteht aus einem umlaufenden, endlosen Zugorgan, nämlich einem Gurt 21. An diesem sind Halterungen bzw. Mitnehmer 22 für die Packungen 10 angeordnet. Im Bereich eines aufrechten Fördertrums 23 sind die Mitnehmer 22 plattformartig horizontal gerichtet. In einer unteren Position können die Packungen unmittelbar auf jeweils einen Mitnehmer 22 aufgefördert werden. Der Zuförderer 18 bildet in diesem Endbereich einen Packungsstau 24. Jeweils die beiden vorderen Packungen 10 werden auf einen Mitnehmer 22 gefördert, während die übrigen Packungen des Packungsstaus 24 durch ein seitliches Bremsorgan 25 zurückgehalten werden.

Auf der freien Seite des Vertikalförderers 20 kann eine feststehende, aufrechte Führung angeordnet sein. Deren Abstand vom Fördertrum 23 entspricht etwa der Querabmessung von zwei Packungen 10a, 10b (Breite der Seitenflächen 13, 14). Die Packungen 10 gleiten an der (nicht dargestellten) aufrechten Führung entlang.

Im Bereich einer oberen Umlenkung des Gurts 21, also am Ende einer aufrechten Förderstrecke für die Packungen 10, werden diese in Querrichtung durch einen Abförderer 27 abtransportiert. Dieser ist hier ebenfalls als Gurtförderer ausgebildet. Die Packungen 10 liegen mit einer (unteren) Seitenfläche 14 auf dem Abförderer 27 auf. Die Orientierung der Packungen 10 ist jedoch derart, daß die Bodenfläche 16 (oder die Stirnfläche 15) in Förderrichtung weist.

In besonderer Weise ist eine Übergabestation 28 ausgebildet zum geordneten, schonenden Transport der Packungen 10 vom Vertikalförderer 20 zum quer- bzw. horizontalgerichteten Abförderer 27. Die Packungen 10 werden bei dem vorliegenden Ausführungsbeispiel in einer Richtung weitertransportiert, die quer bzw. unter einem rechten Winkel zur Transportrichtung des Zuförderers 18 verläuft.

In der Übergabestation 28 werden die Packungen zeitweilig durch einen Überführungsförderer 29 transportiert. Dieser übernimmt die Packungen 10 vom Vertikalförderer 20, transportiert sie ohne Veränderung der Winkelstellung entlang einer kreisbogenförmigen Förderstrecke zum Abförderer 27.

Der Überführungsförderer 29 ist zu diesem Zweck mit mehreren, nämlich drei Packungsaufnahmen 30 versehen, die eine geschlossene, im vorliegenden Falle kreisbogenförmige Bahn in translatorischer Bewegung durchlaufen. Aufgrund der Ausgestaltung und Positionierung der Packungsaufnahmen 30 ist sichergestellt, daß eine Plattform 31 als Auflagefläche für die (zwei) Packungen 10a, 10b in horizontaler Position gehalten wird. Die Packungsaufnahmen 30 sind zu diesem Zweck an bzw. zwischen zwei sychron umlaufenden Endlosförderern angebracht, nämlich an kreisförmigen Drehscheiben 32, 33. Diese sind in vertikalen Ebenen parallel zueinander angeordnet mit einem Abstand, der geringfügig größer ist als die Breite der zu handhabenden (zwei) Packungen 10a, 10b. Drehachsen 34, 35 der Drehscheiben 32, 33 sind in horizontaler Ebene versetzt zueinander gelagert.

Die Packungsaufnahmen 30 weisen ein zwischen den Drehscheiben 32, 33 gelagertes Tragstück 36 auf. Dieses ist ständig horizontal gerichtet. An gegenüberliegenden Seiten sind seitwärtsgerichtete Drehlager 37, 38 angebracht, durch die die Packungsaufnahmen 30 bzw. deren Tragstücke 36 drehbar jeweils mit beiden Drehscheiben 32, 33 verbunden sind. Die Drehlager 37, 38 sind jeweils mit geringem Abstand vom freien, äußeren Rand der Drehscheiben 32, 33 angeordnet und entsprechend dem Abstand der Drehachsen 34, 35 versetzt zueinander.

An das Tragstück 36 schließt auf der freien Seite die Plattform 31 der Packungsaufnahme 30 an. Diese ist radial außen und innen mit einer Abstützung für die Packung 10a, 10b versehen, nämlich mit nach oben gerichteten Haltenasen 39, 40.

Die Plattform 31 ist so geformt, daß die Übernahme der Packungen 10 vom Vertikalförderer 20 bzw. von dessen Mitnehmern 22 möglich ist. Die Plattform 31 ist im Grundriß U-förmig ausgebildet mit einem radial außenliegenden Tragschenkel 41 und einem innenliegenden Tragschenkel 42. Diese umgeben eine einseitig offene Ausnehmung 43 in der Plattform 31 für den Durchtritt der Mitnehmer 22 bei Übernahme einer Packung 10. Der Tragschenkel 42 ist mit einer mittigen Vertiefung 44 versehen, derart, daß zu beiden Seiten derselben Tragstege 45 und 46 zur Lagerung der (zwei) Packungen 10a, 10b gebildet sind.

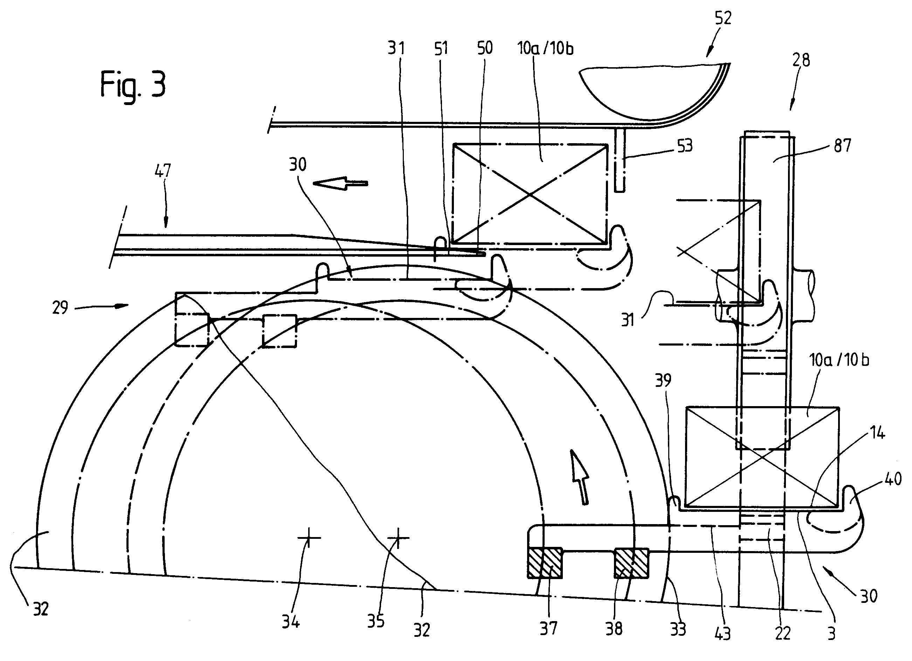

Bei der Übernahme der Packungen 10 durch die Packungsaufnahmen 30 vom Vertikalförderer 20 kommt die besondere Bewegungscharakteristik des Überführungsförderers 29 zur Wirkung. Die Packungsaufnahme 30 tritt von unten her in den Bereich des Vertikalförderers 20 ein, und zwar in der Bewegungsbahn der Packungen 10a, 10b. Etwa in Höhe der Drehachsen 34, 35 erfaßt die Packungsaufnahme 30 die Packungen 10 an deren Unterseite - im vorliegenden Falle an den nach unten weisende Seitenflächen 14. Bei der Weiterbewegung werden die Packungen 10 infolge höherer Geschwindigkeit durch die Packungsaufnahme 30 von dem Mitnehmer 22 abgehoben. Zugleich beginnt infolge der Bewegungsbahn der Packungsaufnahme 30 eine Seitwärtsbewegung aus dem Bereich des Vertikalförderers 20 heraus in Richtung zum Abförderer 27 (strichpunktierte Linien in Fig. 3).

Im Bereich des Abförderers 27 werden die Packungen 10 von der Packungsaufnahme 30 an eine horizontalgerichtete, feststehende Tragplatte 47 übergeben. Auf dieser werden die Packungen 10 weitertransportiert bis zur Übernahme durch Förderbänder 48, 49.

Die Packungen 10a, 10b werden durch die umlaufenden Packungsaufnahmen 30 bis auf das Niveau des Abförderers 27 bzw. der Tragplatte 47 transportiert, wobei sich die Packungsaufnahmen 30 vom Vertikalförderer 20 entfernt haben (Fig. 3). In der höchsten Stellung der Packungsaufnahmen 30 werden die Packungen 10 an den Abförderer, nämlich an die Tragplatte 47 übergeben. Die mit einem angeschärften Ende 50 ausgebildete Tragplatte 47 tritt dabei mit einer mittigen Zunge 51 in die Vertiefung 44 zwischen den Tragstegen 45, 46 ein. Während die Packungsaufnahme 30 aufgrund der Bewegungscharakteristik nach unten abtaucht (Fig. 3), wird der weitere Transport der Packungen 10 durch einen Zwischenförderer 52 übernommen, der aus einem Förderband mit quergerichteten Mitnehmern 53 besteht. Die Packungen werden durch den Zwischenförderer 52 auf der Tragplatte 47 transportiert bis zur Übernahme durch die Förderbänder 48, 49.

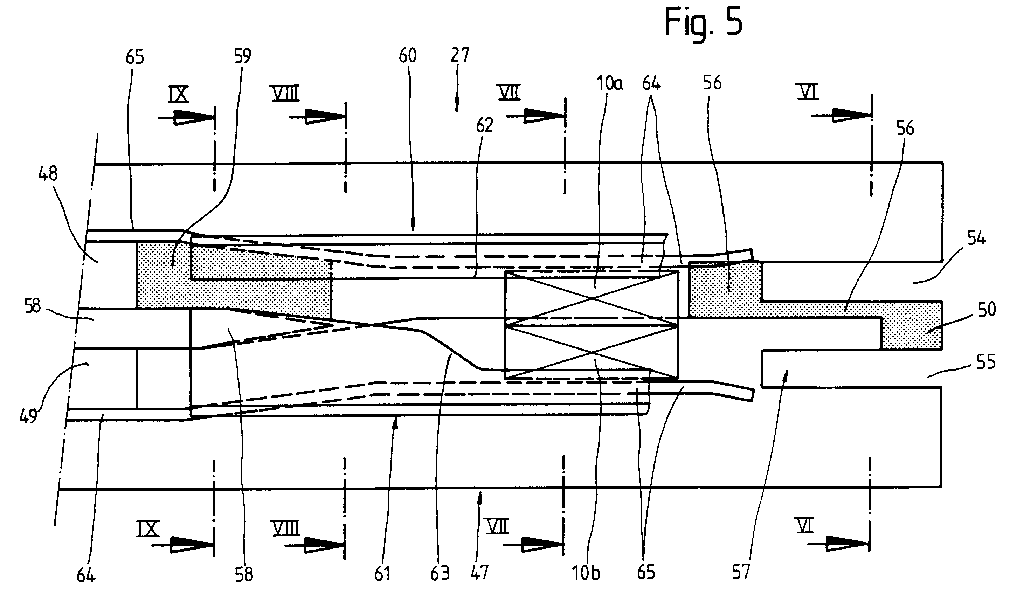

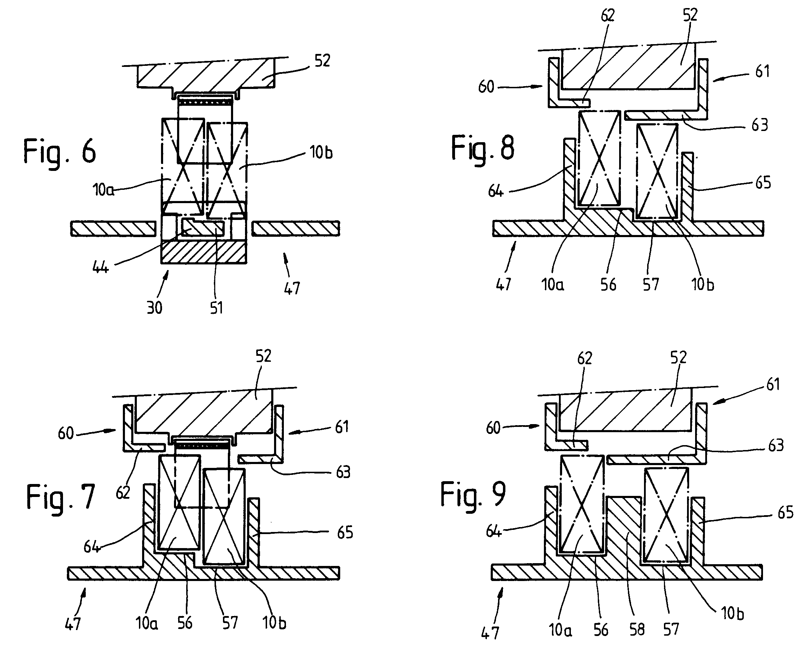

Der Anfangsbereich der Tragplatte 47 ist mit in Längsrichtung verlaufenden schlitzförmigen Ausnehmungen 54, 55 versehen. In diese treten die Tragstege 45, 46 der Packungsaufnahme 30 ein, während die Packungen 10a, 10b auf der zwischen den Ausnehmungen 54, 55 gebildeten Zunge 51 abgesetzt werden. Diese ist in einem Teilbereich mit einer schräg ansteigenden Gleitfläche 56 versehen, die in Fig. 5 durch Punktierung gekennzeichnet ist. Diese Gleitfläche 56 ist lediglich einer der beiden Packungen, nämlich der Packung 10a (Fig. 7) zugeordnet. Die andere Packung 10b wird auf einer daneben gebildeten Gleitfläche 57 weiterbewegt, die der Ebene der Tragplatte 47 im übrigen entspricht. Die Packungen 10a, 10b gelangen demnach in einer der Höhe nach versetzten Relativstellung zueinander. Ein zwischen den Gleitflächen 56, 57 gebildeter Absatz geht in Transportrichtung allmählich über in eine Trennwand 58 zwischen den Gleitflächen 56, 57. Die Packungen 10a, 10b werden so während des Transports im Bereich der Tragplatte 47 auf einfache, zuverlässige und schonende Weise voneinander getrennt, so daß sie schließlich den beiden im Abstand voneinander verlaufenden Förderbändern 48, 49 übergeben werden können. Dabei geht die Gleitfläche 56 für die Packungen 10a über ein Gefälle 59 auf die Ebene des Förderbandes 48 über.

Während des Transports in diesem Bereich (durch den Zwischenförderer 52) ist den Packungen 10a, 10b eine Oberführung 60, 61 zugeordnet mit einem horizontalen Führungsschenkel 62, 63. Der Führungsschenkel 63 für die Packungen 10b im Bereich der tieferliegenden Gleitfläche 57 verändert seine Form in Transportrichtung und dient als Seitenführung für die benachbarte Packung 10b im Bereich der Aufteilung der Packungen 10a, 10b auf die beiden Bahnen (Förderbänder 48, 49).

Darüber hinaus sind im Bereich der Tragplatte 47 Seitenführungen 64, 65 für die Packungen 10a, 10b vorgesehen, die sich auch im Bereich der Förderbänder 48, 49 erstrecken.

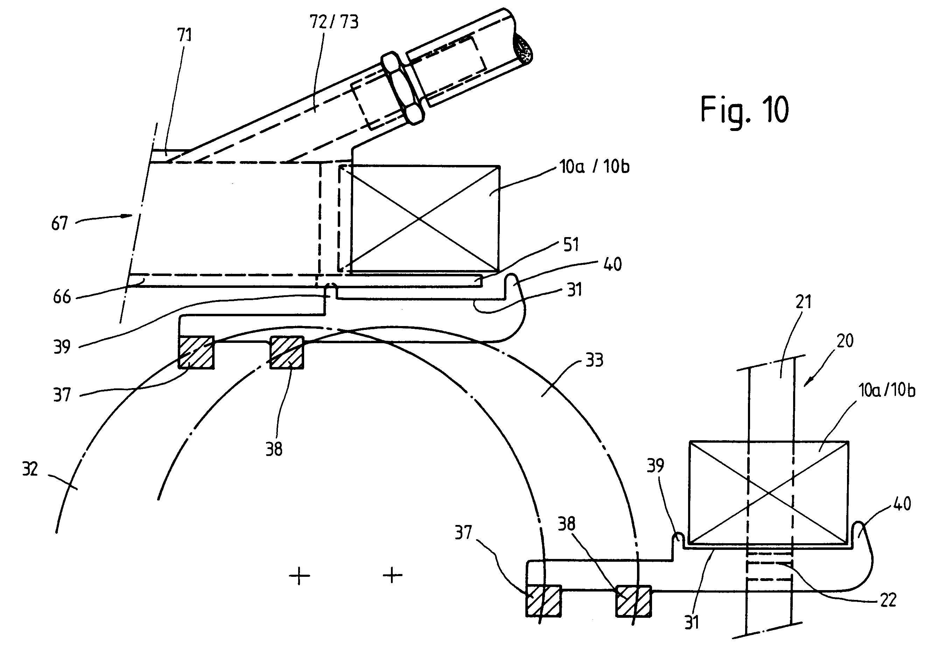

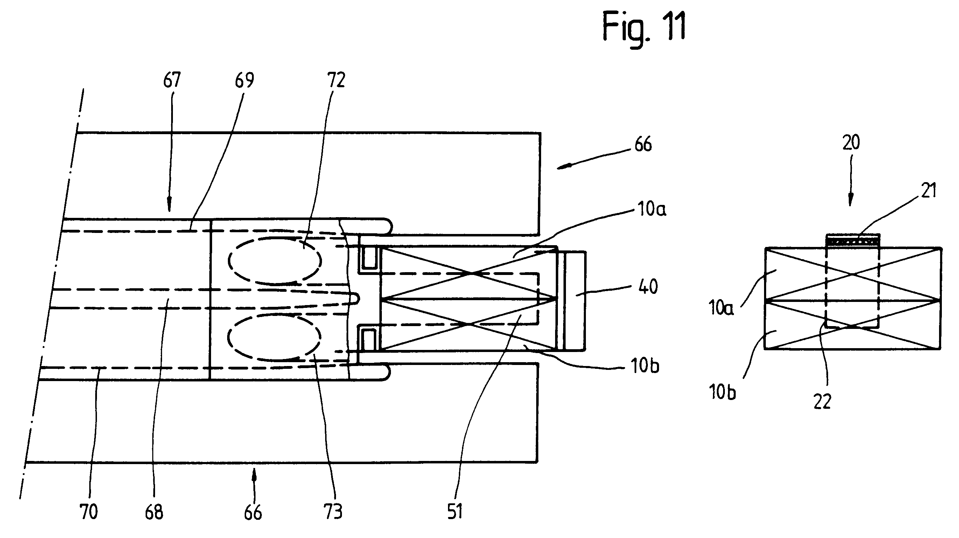

Eine Alternative für die vorstehend beschriebenen Organe zum Abtransport der vom Überführungsförderer 29 dem Abförderer 27 zugeführten Packungen 10a, 10b ist in Fig. 10 und 11 gezeigt. Die auf einer Tragplatte 66 analog zum Ausführungsbeispiel der Fig. 5 abgesetzten Packungen 10a, 10b werden durch Blasluft bzw. Unterdruck weiterbefördert. Zu diesem Zweck schließt an den Anfangsbereich der Tragplatte 66 ein im Querschnitt geschlossener Förderkanal 67 für die Packungen 10a, 10b an. Der Förderkanal 67 ist durch eine mittlere Trennwand 68 in zwei Teilkanäle 69, 70 unterteilt, die je einer Packung 10a, 10b zugeordnet sind und deren Querschnitt dem der Packungen entspricht. Im Bereich einer Deckwand 71 des Förderkanals 67 wird von oben her in Förderrichtung strömende Blasluft bzw. Druckluft zugeführt. Zu diesem Zweck münden im Anfangsbereich des Förderkanals 67 Druckluftanschlüsse 72, 73. Es handelt sich dabei um Druckluftkanäle, die unter einem spitzen Winkel zur Längsrichtung des Förderkanals 67 weisen und Druckluft in Förderrichtung in jeden Teilkanal 69, 70 leiten. Mündungen der Druckluftanschlüsse 72, 73 befinden sich mit Abstand vom Anfang des Förderkanals 67. Dadurch entsteht in diesem Anfangsbereich des Förderkanals 67 ein Unterdruck, der die Packungen 10a, 10b in schonender, aber zuverlässiger Weise in den Förderkanal 67 zieht und dabei selbsttätig auf die Teilkanäle 69, 70 verteilt.

Nach einer gewissen Förderstrecke mit Druckluft, also im Anschluß an den Förderkanal 67, kann der weitere Transport der Packungen mit Förderbändern erfolgen.

Zum Antrieb des Überführungsförderers 29 sind die beiden Drehscheiben 32, 33 mit Zapfen in Drehlagern 74, 75 eines Traggestells 76 gelagert. Dieses weist zwei ungleich lange Tragschenkel 77 und 78 auf, an denen die Drehlager 74, 75 angebracht sind. Das Traggestell 76 ist mit dem Maschinengestell verbunden. Der Antrieb wird dabei lediglich auf die Drehscheibe 32 unmittelbar übertragen. Über die Packungsaufnahmen 30 wird die gegenüberliegende Drehscheibe 33 mitgenommen.

Ein zentraler Antrieb besteht aus einer Hauptwelle 79, die mit einem Zentralgetriebe 80 verbunden ist. Von diesem werden einerseits der Überführungsförderer 29 sowie der Zwischenförderer 52 angetrieben und andererseits der Vertikalförderer 20.

Ein erstes, seitlich am Zentralgetriebe 80 angeordnetes Antriebsrad 81 ist einem Antrieb für den Überführungsrevolver 29 zugeordnet. Ein Antriebsgurt 82 überträgt den Antrieb auf ein Getrieberad 83, welches über das Drehlager 74 mit der Drehscheibe 32 verbunden ist.

Derselbe Antriebsgurt 82 wirkt auf ein weiteres Antriebsrad 84, welches dem Zwischenförderer 52 zugeordnet ist. Ein Drehlager 85 für diesen ist in einem nach oben verlängerten Bereich des Tragschenkels 77 angeordnet.

Ein anderes, zweites Antriebsrad 90 des Zentralgetriebes 80 wirkt auf ein Antriebsband 86 für den Antrieb einer oberen Umlenkrolle 87 des Vertikalförderers 20.

Im Bereich des Vertikalförderers 20 liegen die Packungen 10 auf den Mitnehmern 22 weitgehend frei. Dadurch ist es möglich, in diesem Bereich eine optoelektrische Kontrolle der Packungen 10 durch Sensoren 88, 89 durchzuführen, die von unten und oben sowie seitwärts gegen die Packungen 10 gerichtet sind. So können in diesem Bereich ohne Unterbrechung des Fördervorgangs die Packungen 10 auf korrekte Ausbildung überprüft werden.

## Patentansprüche

1. Vorrichtung zum Transport von quaderförmigen Packungen (10), insbesondere Zigaretten-Packungen, die durch rechteckige Vorder- und Rückflächen, langgestreckte, schmale Seitenflächen (14) und kleine Stirn- bzw. Bodenflächen begrenzt sind, insbesondere von einer ersten Verpackungsmaschine zu einer zweiten Verpackungsmaschine für eine Außenumhüllung (10), mit folgenden Merkmalen:
a) ein Vertikalförderer (20) weist zur Mitnahme der Packungen (10) vertikal bewegte Mitnehmer (22) auf,
b) dem Vertikalförderer (20) nachgeordnet ist ein insbesondere horizontal er Abförderer (27),
c) an den Vertikalförderer (20) schließt ein Überführungsförderer (29) an, durch den die Packungen (10) dem Abförderer (27) zuführbar sind,
**gekennzeichnet durch** folgende Merkmale:
d) dem Vertikalförderer (20) ist ein bandförmiger Zuförderer (18) vorgeordnet, auf dem die Packungen (10) mit einer der schmalen Seitenflächen aufliegen bei in Förderrichtung weisender Vorder- oder Rückfläche,
e) bei Übergabe vom Zuförderer (18) an den Vertikalförderer (20) kommen die Packungen (10) auf den Mitnehmern (22) mit nach unten gerichteten Seitenflächen (14) zu liegen,
f) bei Übergabe vom Vertikalförderer (20) durch den Überführungsförderer (29) an den Abförderer (27) sind die Packungen (10) in den letzteren durch Bewegung in Längsrichtung der Packungen (10) einführbar, derart, daß diese mit einer unteren, schmalen Seitenfläche (14) auf dem Abförderer (27) aufliegen und mit ihrer Stirn bzw. Bodenfläche in Förderrichtung weisen.

2. Vorrichtung nach Anspruch 1, dadurch gekennzeichnet, daß der Vertikalförderer (20) aus einem Förderband (21) bzw. einer Förderkette mit horizontal gerichteten Mitnehmern (22) sowie einer aufrechten feststehenden Seitenführung im Bereich eines Fördertrums (23) auf der freien Seite der Mitnehmer (22) besteht.

3. Vorrichtung nach Anspruch 2, dadurch gekennzeichnet, daß die Packungen (10) vom Zuförderer (18) aus auf der zum Förderband (21) gegenüberliegenden, freien Seite der Mitnehmer (22) auf diese aufschiebbar sind.

4. Vorrichtung nach Anspruch 1 oder einem der weiteren Ansprüche, dadurch gekennzeichnet, daß die Packungen (10) während des Transports durch den Vertikalförderer (20) im Bereich der nach oben, unten und seitlich weisenden Flächen (13, 14) überprüft werden, insbesondere durch fotoelektrische Prüforgane (88, 89), wobei die Mitnehmer (22) so bemessen bzw. ausgebildet sind, daß zu prüfende Bereiche der nach unten weisenden Seitenflächen (13, 14) freiliegen.

5. Vorrichtung nach Anspruch 1 oder einem der weiteren Ansprüche, dadurch gekennzeichnet, daß die ankommenden Packungen (10a, 10b) durch den Zuförderer (18) paarweise in den Vertikalförderer (20) ein- bzw. auf dessen Mitnehmer (22) aufschiebbar und paarweise von den Mitnehmern (22) an den Abförderer (27) überführbar sind.

6. Vorrichtung nach Anspruch 1 oder einem der weiteren Ansprüche, dadurch gekennzeichnet, daß die Packungen (10a, 10b) im Bereich des Abförderers (27) auf zwei im Abstand voneinander angeordnete Förderbahnen bzw. Förderbänder (48, 49) verteilt werden.

7. Vorrichtung nach Anspruch 6, dadurch gekennzeichnet, daß dem Abförderer (27) eine Verteilereinheit zugeordnet ist, durch die die ankommenden Packungen (10) den beiden Förderbändern (48, 49) des Abförderers (27) zuführbar sind.

8. Vorrichtung nach Anspruch 1 oder einem der weiteren Ansprüche, gekennzeichnet durch einen Überführungsförderer (29) mit an endlosen Förderorganen angebrachten, ausschließlich translatorisch bewegten Packungsaufnahmen (30), die je mindestens eine Packung (10) von den Mitnehmern (22) abheben, längs einer bogenförmigen Bewegungsbahn transportieren und auf dem Abförderer (27) ablegen.

9. Vorrichtung nach Anspruch 8, dadurch gekennzeichnet, daß die Packungsaufnahmen (30) je an zwei in aufrechten, parallelen Ebenen und mit zueinander versetzten Drehachsen (34, 35) angeordneteten Kreisförderern, insbesondere Drehscheiben (32, 33), derart angebracht sind, daß Auflageflächen bzw. eine Plattform (31) der Packungsaufnahme (30) stets horizontal gerichtet ist bzw. sind.

10. Vorrichtung nach Anspruch 9, dadurch gekennzeichnet, daß jede Packungsaufnahme (30) mit zwei in einer gemeinsamen horizontalen Ebene und mit Abstand voneinander angeordneten sowie an gegenüberliegenden Seiten angeordneten Drehlagern (37, 38) mit beiden Kreisförderern, insbesondere beiden Drehscheiben (32, 33), verbunden ist.

11. Vorrichtung nach Anspruch 9 oder 10, dadurch gekennzeichnet, daß jede Packungsaufnahme (30) mit einem Tragstück (36) an beiden Kreisförderern (32, 33) gelagert ist und mit einer Plattform (31) zur Aufnahme von Packungen (10, 10a, 10b) wenigstens im Bereich der kreisbogenförmigen Förderstrecke über die Kreisförderern (32, 33) hinwegragt.

12. Vorrichtung nach Anspruch 11, dadurch gekennzeichnet, daß die Plattform (31) eine Ausnehmung (43) aufweist, die nach Positionierung und Größe auf die Mitnehmer (22) des Vertikalförderers (20) abgestimmt ist, derart, daß die Plattform (31) der Packungsaufnahme (30) durch Aufwärtsbewegung relativ zu einem Mitnehmer (22) Packungen (10) von diesem abhebt und aus dem Bereich des Vertikalförderers (20) herausbewegt.

13. Vorrichtung nach Anspruch 8 oder einem der weiteren Ansprüche, dadurch gekennzeichnet, daß die Packungen (10) durch den Überführungsförderer (29) auf einer Tragplatte (47) des Abförderers (27) absetzbar sind, wobei die Tragplatte (47) mit einer Zunge (51) zur Übernahme der Packung in eine Ausnehmung (54) der Plattform (31) eintritt.

14. Vorrichtung nach Anspruch 13, dadurch gekennzeichnet, daß die Packungen (10) im Bereich der Tragplatte (47) durch einen Zwischenförderer (52) transportierbar sind, insbesondere durch einen oberhalb der Tragplatte (47) angeordneten Gurt mit die Packungen erfassenden Mitnehmern (53).

15. Vorrichtung nach Anspruch 8 oder einem der weiteren Ansprüche, dadurch gekennzeichnet, daß zwei gleichzeitig geförderte Packungen (10a, 10b) im Bereich der Tragplatte auf zwei Förderbahnen bzw. Förderbändern (48, 49) verteilbar sind durch versetzte Ebenen, nämlich Gleitflächen (56, 57) der Tragplatte (47) und durch eine in Förderrichtung zwischen die Packungen (10a, 10b) eintretende, als Leitorgan wirkende Trennwand (58).

16. Vorrichtung nach Anspruch 8 oder einem der weiteren Ansprüche, dadurch gekennzeichnet, daß zur Förderung von zwei gleichzeitig ankommenden Packungen (10a, 10b) in zwei gesonderte Förderbahnen, insbesondere auf zwei Förderbänder (48, 49) ein in Förderrichtung verlaufender Förderkanal (67) mit geschlossenem Querschnitt und einer mittigen Trennwand zur Bildung von Teilkanälen (69, 70) für jede Packung (10a, 10b) angeordnet ist, wobei in den Förderkanal (67) bzw. in die Teilkanäle (69, 70) über Druckluftanschlüsse (72, 73) Druckluft zur Erzeugung einer Luftströmung in Förderrichtung einleitbar ist, derart, daß eingangsseitig im Förderkanal (67) Unterdruck zum Einführen der Packungen (10a, 10b) in die Teilkanäle (69, 70) entsteht.

17. Vorrichtung nach Anspruch 8 oder einem der weiteren Ansprüche, dadurch gekennzeichnet, daß der Vertikalförderer (20) und der Überführungsförderer (29) und ggf. der Zwischenförderer (52) durch einen gemeinsamen, zentralen Antrieb bewegbar sind, insbesondere über eine Hauptwelle (79) mit einem Zentralgetriebe (80) und von diesem angetriebene Antriebsgurte (82) bzw. Antriebsbänder (86) für den Überführungsförderer (29) einerseits und den Vertikalförderer (20) andererseits, wobei vorzugsweise der Antriebsgurt (82) für den Überführungsförderer (29) auch als Antrieb für den Zwischenförderer (52) dient.

## Claims

1. Apparatus for the transport of cuboid packs (10), in particular cigarette packs, which are limited by rectangular front and rear faces, elongate, narrow side faces (14) and small end or bottom faces, especially from a first packaging machine to a second packaging machine for an outer wrapping (10), having the following features:
a) a vertical conveyor (20) has vertically movable drivers (22) for carrying the packs (10),
b) a discharge conveyor (27), which is, in particular, horizontal, is arranged downstream of the vertical conveyor (20),
c) the vertical conveyor (20) is followed by a transfer conveyor (29) by means of which the packs (10) can be fed to the discharge conveyor (27),
characterized by the following features:
d) arranged upstream of the vertical conveyor (20) is a band-shaped feed conveyor (18), on which the packs (10) rest with one of the narrow side faces with the front or rear face pointing in the conveying direction,
e) during transfer from the feed conveyor (18) to the vertical conveyor (20) the packs (10), come to rest on the drivers (22) with side faces (14) directed downwards,
f) during transfer from the vertical conveyor (20) to the discharge conveyor (27) by means of the transfer conveyor (29), the packs (10) can be introduced into said discharge conveyor (27) as a result of movement in the longitudinal direction of the packs (10), in such a way that these rest with a lower, narrow side face (14) on the discharge conveyor (27) and point with their end face or bottom face in the conveying direction.

2. Apparatus according to Claim 1, characterized in that the vertical conveyor (20) consists of a conveyor band (21) or a conveyor chain having horizontally directed drivers (22) and a vertical, stationary lateral guide in the region of a conveying strand (23) on the free side of the drivers (22).

3. Apparatus according to Claim 2, characterized in that the packs (10) can be pushed from the feed conveyor (18) onto the drivers (22) on the free side of these which is located opposite the conveyor band (21).

4. Apparatus according to Claim 1 or one of the further claims, characterized in that, during transport by the vertical conveyor (20), the packs (10) are checked in the region of the faces (13, 14) pointing upwards, downwards and laterally, especially by photoelectric test members (88, 89), the drivers (22) being dimensioned or designed in such a way that regions to be tested of the side faces (13, 14) pointing downwards are exposed.

5. Apparatus according to Claim 1 or one of the further claims, characterized in that the arriving packs (10a, 10b) can be pushed in pairs by the feed conveyor (18) into the vertical conveyor (20) or onto its drivers (22) and can be transferred in pairs from the drivers (22) to the discharge conveyor (27).

6. Apparatus according to Claim 1 or one of the further claims, characterized in that, in the region of the discharge conveyor (27), the packs (10a, 10b) are distributed to two conveying paths or conveyor bands (48, 49) arranged at a distance from one another.

7. Apparatus according to Claim 6, characterized in that the discharge conveyor (27) is assigned a distributor unit, by means of which the arriving packs (10) can be fed to the two conveyor bands (48, 49) of the discharge conveyor (27).

8. Apparatus according to Claim 1 or one of the further claims, characterized by a transfer conveyor (29) having pack receptacles (30) which are attached to endless conveying members and are moved solely in translational motion and which each lift off at least one pack (10) from the drivers (22), transport it along an arcuate path of movement and deposit it on the discharge conveyor (27).

9. Apparatus according to Claim 8, characterized in that the pack receptacles (30) are each mounted on two circular conveyors, especially rotary discs (32, 33), arranged in vertical parallel planes and with axes of rotation (34, 35) offset relative to one another, in such a way that bearing surfaces or a platform (31) of the pack receptacle (30) are or is constantly directed horizontally.

10. Apparatus according to Claim 9, characterized in that each pack receptacle (30) is connected to the two circular conveyors, in particular the two rotary discs (32, 33) by means of two rotary bearings (37, 38) arranged in a common horizontal plane and at a distance from one another and arranged on opposite sides.

11. Apparatus according to Claim 9 or 10, characterized in that each pack receptacle (30) is mounted on the two circular conveyors (32, 33) by means of a carrier piece (36) and projects beyond the circular conveyors (32, 33), at least in the region of the conveying path in the form of an arc of a circle, by means of a platform (31) for receiving packs (10, 10a, 10b).

12. Apparatus according to Claim 11, characterized in that the platform (31) has a recess (43) which is coordinated in terms of positioning and size with the drivers (22) of the vertical conveyor (20), in such a way that, as a result of an upward movement relative to a driver (22), the platform (31) of the pack receptacle (30) lifts off packs (10) from the driver (22) and moves them out of the region of the vertical conveyor (20).

13. Apparatus according to Claim 8 or one of the further claims, characterized in that the packs (10) can be deposited by the transfer conveyor (29) on a carrier plate (47) of the discharge conveyor (27), the carrier plate (47) penetrating into a recess (54) of the platform (31) by means of a tongue (51) for the purpose of taking over the pack.

14. Apparatus according to Claim 13, characterized in that the packs (10) can be transported in the region of the carrier plate (47) by an intermediate conveyor (52), especially by a belt arranged above the carrier plate (47) and having drivers (53) grasping the packs.

15. Apparatus according to Claim 8 or one of the further claims, characterized in that two simultaneously conveyed packs (10a, 10b) can be distributed, in the region of the carrier plate, to two conveying paths or conveyor bands (48, 49) by means of offset planes, namely sliding faces (56, 57) of the carrier plate (47), and by means of a partition wall (58) penetrating between the packs (10a, 10b) in the conveying direction and acting as a guide member.

16. Apparatus according to Claim 8 or one of the further claims, characterized in that, for conveying two simultaneously arriving packs (10a, 10b) into two separate conveying paths, especially onto two conveyor bands (48, 49), there is arranged a conveying channel (67) extending in the conveying direction and having closed cross-section and a central partition wall for forming part channels (69, 70) for each pack (10a, 10b), compressed air for generating an air flow in the conveying direction being capable of being introduced into the conveying channel (67) or into the part channels (69, 70) via compressed-air connections (72, 73), in such a way that a vacuum for introducing the packs (10a, 10b) into the part channels (69, 70) occurs in the conveying channel (67) on the inlet side.

17. Apparatus according to Claim 8 or one of the further claims, characterized in that the vertical conveyor (20) and the transfer conveyor (29) and, if appropriate, the intermediate conveyor (52) can be moved by means of a common central drive, especially via a main shaft (79) having a central gear (80) and via drive belts (82) or drive bands (86) driven by this, for the transfer conveyor (29) on the one hand and for the vertical conveyor (20) on the other hand, the drive belt (82) for the transfer conveyor (29) also preferably serving as a drive for the intermediate conveyor (52).

## Revendications

1. Dispositif de transport de paquets parallélépipédiques (10), en particulier de paquets de cigarettes, délimités par des surfaces avant et arrière, des surfaces latérales (14) étroites et allongées et de petites surfaces frontales ou surfaces de fond, rectangulaires, en particulier pour assurer le transport, depuis une première machine d'emballage à une deuxième machine d'emballage destinée à effectuer un enveloppement extérieur (10) et présentant les caractéristiques ci-après :
a) un transporteur vertical (20) possède des organes d'entraînement (22) déplacés verticalement, pour assurer l'entraînement des paquets (10),
b) un transporteur d'évacuation (27), en particulier horizontal, est disposé en aval du transporteur vertical (20),
c) un transporteur de transfert (29), au moyen duquel les paquets (10) sont susceptibles d'être amenés au transporteur d'évacuation (27) est raccordé au transporteur vertical (20),
caractérisé par les propriétés ci-après :
d) en amont du transporteur vertical (20) est disposé un transporteur d'amenée (18), réalisé sous forme de bande et sur lequel les paquets (10) reposent par l'une des surfaces latérales étroites lorsque la surface avant ou arrière est tournée dans la direction de transport,
e) lors du transfert du transporteur d'amenée (18) au transporteur vertical (20), les paquets (10) viennent se placer sur les organes d'entraînement (22) avec les surfaces latérales (14) orientées vers le bas,
f) lors du transfert du transporteur vertical (20) au transporteur d'évacuation (27), par le transporteur de transfert (29), les paquets (10) sont susceptibles d'être introduits dans le transporteur d'évacuation (27) par un déplacement en direction longitudinale des paquets (10), de manière que ceux-ci reposent sur le transporteur d'évacuation (27) par une surface latérale (14) inférieure étroite et soient tournés dans la direction du transport par leur surface frontale ou de fond.

2. Dispositif selon la revendication 1, caractérisé par le fait que le transporteur vertical (20) est constitué d'une bande transporteuse (21), respectivement d'une chaîne transporteuse, à organes d'entraînement (22) orientés horizontalement, ainsi que d'un guidage latéral fixe montant verticalement, dans la zone d'un brin de transport (23) placé du côté libre des organes d'entraînement (22).

3. Dispositif selon la revendication 2, caractérisé par le fait que les paquets (10) venant du transporteur d'amenée (18) sont susceptibles d'être poussés sur les organes d'entraînement (22) en étant placés sur leur côté libre, opposé à la bande transporteuse (21).

4. Dispositif selon la revendication 1 ou l'une des autres revendications, caractérisé par le fait que, pendant le transport par le transporteur vertical (20), les paquets (10) sont contrôlés dans la zone des surfaces (13, 14) tournées vers le haut, le bas et le côté, en particulier au moyen d'organes de contrôle (88, 89) photoélectriques, les organes d'entraînement (22) étant dimensionnés et/ou réalisés de manière que les zones à contrôler des surfaces latérales (13, 14) tournées vers le bas soient dégagées.

5. Dispositif selon la revendication 1 ou l'une des autres revendications, caractérisé par le fait que les paquets (10a, 10b) arrivant par le transporteur d'amenée (18) sont susceptibles d'être poussés par paires, dans le transporteur vertical (20), par introduction dans ou dépôt sur ses organes d'entraînement (22) et sont susceptibles d'être transférés par paires les organes d'entraînement (22) au transporteur d'évacuation (27).

6. Dispositif selon la revendication 1 ou l'une des autres revendications, caractérisé par le fait que les paquets (10a, 10b) sont répartis, dans la zone du transporteur d'évacuation (27), sur deux pistes de transport ou bandes de transport (48, 49) disposées à distance l'une de l'autre.

7. Dispositif selon la revendication 6, caractérisé par le fait qu'est associée au transporteur d'évacuation (27) une unité de répartition, par laquelle les paquets (10) arrivants sont susceptibles d'être amenés aux deux bandes de transport (48, 49) du transporteur d'évacuation (27).

8. Dispositif selon la revendication 1 ou l'une des autres revendications, caractérisé par un transporteur de transfert (29) comportant des logements à paquets (30), montés sur des organes de transport à mouvement continu, déplacés exclusivement en translation, et soulevant chacun au moins un paquet (10) depuis les organes d'entraînement (22), en le transportant le long d'une piste de déplacement arquée et en le déposant sur le transporteur d'évacuation (27).

9. Dispositif selon la revendication 8, caractérisé par le fait que les logements à paquets (30) sont montés chacun sur deux transporteurs circulaires, en particulier des disques tournants (32, 33), disposés dans deux plans verticaux et parallèles et avec des axes de rotation (34, 35) décalés l'un par rapport à l'autre, de manière que les surfaces de pose ou une plateforme (31) du logement à paquet (30) soi(en)t toujours orientée(s) horizontalement.

10. Dispositif selon la revendication 9, caractérisé par le fait que chaque logement à paquets (30) équipé de deux paliers de pivotement (37, 38), disposés dans un plan horizontal commun et à distance l'un de l'autre, ainsi que sur des côtés opposés, est relié aux deux transporteurs circulaires, en particulier deux disques tournants (32, 33).

11. Dispositif selon la revendication 9 ou 10, caractérisé par le fait que chaque logement à paquet (30) est monté tournant sur les deux transporteurs circulaires (32, 33), par une pièce support (36), et évolue sur les transporteurs circulaires (32, 33), par une plateforme (31) destinée à supporter des paquets (10, 10a, 10b), au moins dans la zone du chemin de transport arqué.

12. Dispositif selon la revendication 11, caractérisé parle fait que la plateforme (31) présente un évidement (43) conçu, en positionnement et en taille, en tenant compte des organes d'entraînement (22) du transporteur vertical (20), de manière que la plateforme (31) du logement à paquet (30) soulève des paquets (10) vis-à-vis d'un organe d'entraînement (22), par un mouvement de montée effectué par rapport à celui-ci et ressorte ceux-ci de la zone du transporteur vertical (20).

13. Dispositif selon la revendication 8 ou l'une des autres revendications, caractérisé par le fait que les paquets (10) sont susceptibles d'être déposés par le transporteur de transfert (29), sur une plaque support (47) du transporteur d'évacuation (27), la plaque support (47) pénétrant, par une languette (41) destinée à transférer le paquet, dans un évidement (54) de la plateforme (31).

14. Dispositif selon la revendication 13, caractérisé par le fait que les paquets (10) sont transportables, dans la zone de la plaque support (47), par un transporteur intermédiaire (52), en particulier par une courroie, disposée au-dessus de la plaque support (47) et dotée des organes d'entraînement (53) saisissant les paquets.

15. Dispositif selon la revendication 8 ou l'une des autres revendications, caractérisé par le fait que deux paquets (10a, 10b) transportés simultanément sont susceptibles d'être répartis, dans la zone de la plaque support, sur deux pistes de transport ou bandes de transport (48, 49), par des plans décalés, notamment des surfaces de glissement (56, 57) de la plaque support (47) et par une paroi de séparation (58) pénétrant entre les paquets (10a, 10b) dans la direction de transport et agissant comme un organe de guidage directionnel.

16. Dispositif selon la revendication 8 ou l'une des autres revendications, caractérisé par le fait que, pour assurer le transport de deux paquets (10a, 10b) arrivant simultanément, dans deux pistes de transport séparées, en particulier sur deux bandes de transport (48, 49), est disposé un canal de transport (67) courant dans la direction du transport et dont la section transversale est fermée et une paroi de séparation centrale, destinée à constituer des canaux partiels (69, 70) pour chaque paquet (10a, 10b), de l'air comprimé étant susceptible d'être introduit, par des raccords à air comprimé (72, 73) dans le canal de transport (67) ou les canaux partiels (69, 70), afin de produire un écoulement d'air dans la direction du transport, de manière que, côté entrée, dans le canal de transport (67) une dépression soit produite, afin d'introduire les paquets (10a, 10b) dans les canaux partiels (69, 70).

17. Dispositif selon la revendication 8 ou l'une des autres revendications, caractérisé par le fait que le transporteur vertical (20) et le transporteur de transfert (29) et, le cas échéant, le transporteur intermédiaire (52) sont déplaçables au moyen d'un entraînement central commun, en particulier par un arbre principal (79) équipé d'une transmission centrale (80) et par des courroies d'entraînement (82) ou des bandes d'entraînement (86) entraînées par celle-ci et destinées au transporteur de transfert (29) d'une part et au transporteur vertical (20) d'autre part, de préférence la courroie d'entraînement (82) destinée au transporteur de transfert (29) servant également d'entraînement pour le transporteur intermédiaire (52).
